(19) Europäisches Patentamt
European Patent Office
Office européen des brevets

(11) Numéro de publication: **0 015 818**
**B1**

# (12) FASCICULE DE BREVET EUROPEEN

(45) Date de publication du fascicule du brevet: **15.09.82**

(21) Numéro de dépôt: **80400259.0**

(22) Date de dépôt: **25.02.80**

(51) Int. Cl.³: **C 01 B 15/037,**
C 09 K 15/32, C 07 F 9/38

## (54) Solutions aqueuses stabilisées de peroxyde d'hydrogène.

(30) Priorité: **05.03.79 FR 7905600**

(43) Date de publication de la demande:
**17.09.80 Bulletin 80/19**

(45) Mention de la délivrance du brevet:
**15.09.82 Bulletin 82/37**

(84) Etats contractants désignés:
**BE CH DE FR GB IT NL SE**

(56) Documents cités:
**DE - A - 2 800 457**
**FR - A - 2 132 215**
**GB - A - 744 633**
**US - A - 4 057 440**

(73) Titulaire: **OXYSYNTHESE**
**6, rue Cognacq-Jay**
**F-75007 Paris (FR)**

(72) Inventeur: **Thirion, Pierre**
**15, Hameau du Manoir Noyarey**
**F-38360 Sassenage (FR)**

(74) Mandataire: **Bouton Neuvy, Liliane et al,**
**L'Air liquide, Société Anonyme pour L'Etude et L'Exploitation des Procédés Georges Claude 75, Quai d'Orsay**
**F-75321 Paris Cedex 07 (FR)**

**EP 0 015 818 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**0015818**

Solutions aqueuses stabilisées de peroxyde d'hydrogène.

La présente invention concerne la stabilisation des solutions aqueuses de peroxyde d'hydrogène.

Les solutions de peroxyde d'hydrogène présentent une extrême sensibilité aux catalyseurs de décomposition, en général représentés par les ions des métaux lourds et polyvalents tels que: fer, cuivre, plomb, titane, manganèse, etc... Dans les solutions commerciales de peroxyde d'hydrogène, le niveau de concentration de l'ensemble de ces catalyseurs est en général inférieur au mg/litre et souvent au 1/10e de mg/litre.

Malgré cette grande pureté, on ajoute toujours un ou plusieurs stabilisants à ces solutions. Cette opération apporte en outre une certaine garantie contre une légère pollution accidentelle possible lors des opérations de transport, de dépotage et surtout de dilution.

Par solutions de peroxyde d'hydrogène on désigne les solutions aqueuses de peroxyde d'hydrogène "pures" ou commerciales fournies par les producteurs à des concentrations comprises entre 30 et 90% en poids de peroxyde d'hydrogène 100% et, par extension, les solutions plus diluées, avant emploi par les utilisateurs.

Il est communément convenu par les producteurs qu'une solution de peroxyde d'hydrogène ayant une perte relative de moins de 5% au test 100° (soit plus de 95% de stabilité) correspond aux normes commerciales de stabilité.

La stabilité du peroxyde d'hydrogène se mesure par des tests de laboratoire dont le plus employé consiste à porter un échantillon de peroxyde à une température comprise entre 95 et 100°C, de l'y maintenir durant 15 à 24 heures. Après refroidissement et réajustement du volume à celui initialement jaugé, la mesure de la perte de titre relative % du peroxyde:

$$\frac{(t - t') \times 100}{t}$$

est l'expression du taux de décomposition relative en "n" heures à 100° (ou 95°C). La stabilité est l'expression inverse, soit: 100— (taux de décomposition %).

On a également utilisé une autre méthode permettant de suivre en fonction du temps et à tout moment, l'évolution de la décomposition. Cette méthode consiste à recueillir dans une éprouvette à gaz graduée et à mesurer l'oxygène fourni par la décomposition d'un échantillon porté à 100°C.

Au cours du test de mesure en continu de la vitesse de décomposition selon l'oxygène dégagé, on constate après une période plus ou moins longue, que très nombreux sont les stabilisants couramment décrits ou connus par l'art antérieur qui deviennent subitement inefficaces.

Les acides R — aminodiacétiques, tels les acides amino triacétiques (NTA) ou éthylène diamino tétracétiques (EDTA) ou encore diéthylène triamino pentacétique (DTPA), spécialement synthétisés en vue de la complexion des cations métalliques en milieu aqueux, se révèlent des molécules très fragiles et dégradables dans les milieux peroxyde d'hydrogène chauds. Ces molécules séquestrantes introduites dans les solutions de peroxyde d'hydrogène et soumises au test 100°C en 15 heures se présentent comme des composés pratiquement inertes; suivant les conditions, le gain de stabilité est trop léger ou nul et parfois négatif. Or, le test de mesure continue de la décompositions à 100°C, permet de faire apparaitre l'action stabilisante de ces produits, mais révèle que vers 100°C leur durée d'activité ne dépasse pas quelques heures.

L'ion pyrophosphate très couramment employé comme stabilisant du peroxyde d'hydrogène, lui, par contre, subit une lente hydrolyse dans le test à 100°C, qui le convertit en ion orthophosphonique pratiquement inactif.

Pour les stabilisants moins sensibles à l'oxydation ou à l'hydrolyse, un des moyens de tenter de prolonger la période de stabilisation effective au test 100° est d'augmenter la concentration du stabilisant; cette augmentation peut être considérable, et, il a même été proposé des concentrations dépassant 1%.

Par le brevet français 2.216.221, au nom de la Société dite FMC Corporation, on connait des solutions aqueuses de peroxyde d'hydrogène stabilisées par 1 à 3% (soit 10.000 à 30.000 mg/litre) d'un mélange d'acide amino tri (méthylphosphonique) et d'acide éthylènediamine tétra (méthylphosphonique). Le brevet français n°. 2.111.784, également au nom de FMC, mentionne l'emploi du même composé hydrosoluble d'éthylènediamine et d'acide tétra (méthylènephosphonique) à des doses de 300 à 5000 mg/kg, éventuellement associé à un composé d'étain soluble et à des ions nitrate dans le double but d'une stabilisation du peroxyde d'hydrogène et d'une inhibition de la corrosion des réservoirs en aluminium. Par la demande de brevet français n° 2.132.215, on connaît un procédé de nettoyage de matière textile en milieu aqueux alcalin contenant un composé dégageant de l'oxygène actif, tel le peroxyde d'hydrogène, et un stabilisant l'acide éthylènediamine tétraméthylène-phosphonique ou ses dérivés.

Lors des essais de stabilisation avec les acides aminoacétiques, il a été découvert de manière imprévisible que le remplacement des groupements acétiques $CH_2COOH$ par des groupements méthyl-phosphoniques $CH_2PO(OH)_2$ confère aux nouvelles molécules une tenue au peroxyde d'hydrogène à

100°C absolument remarquable.

La demande de brevet européen EP—A—0009839 appartenant à l'état de la technique visé à l'article 54 (3) divulgue des solutions aqueuses de peroxyde d'hydrogène stabilisées par un phosphonate de formule

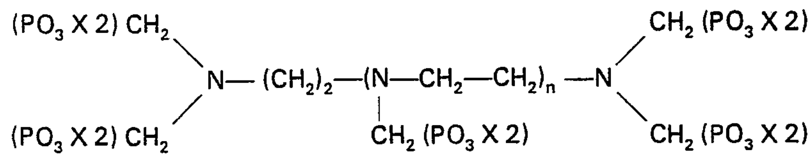

dans laquelle n = 1 à 4, X est H ou un cation soluble. Le phosphonate est présent à raison de 0,03 à 1% en poids pour stabiliser les solutions acides et de 0,1 à 10% pour stabiliser les solutions alcalines.

La résistance des groupements méthyl-phosphoniques est telle qu'il est possible de réduire considérablement la concentration de ces nouveaux stabilisants, tout en gardant un excellent résultat du test de stabilité 100° — 15 à 24 heures. Par rapport aux doses couramment employées pour les stabilisants courants, celles qu'on préconise pour les acides amino-méthyl phosphoniques sont de l'ordre de 5 à 20 fois plus réduites.

Malgré le prix de revient relativement élevé de ces produits, cette réduction de concentration permet de maintenir, ou même de réduire le coût de la stabilisation du péroxyde d'hydrogène tout en maintenant un haut degré de pureté aux solutions commerciales.

Selon l'invention, toute solution aqueuse stabilisée de peroxyde d'hydrogène pure ou commerciale de concentration comprise entre 30 et 90%, en poids de peroxyde d'hydrogène, contient à titre de stabilisant l'acide diéthylène triaminopenta (méthylphosphonique) de formule:

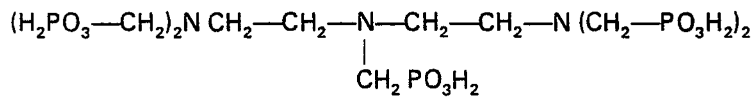

sous forme acide, de sel de sodium, potassium ou ammonium, utilisé à une concentration comprise entre 5 et 100 mg par litre de solution de peroxyde d'hydrogène.

La concentration efficace de l'acide diéthylène triaminopenta (méthylphosphonique) est comprise entre 5 et 100 mg par litre de solution de peroxyde d'hydrogène; une concentration de 100 mg/litre représente un maximum même pour les cas les plus difficiles, alors que des concentrations de 5 à 50 mg/litre et en particulier de 25 à 50 mg/litre sont les plus couramment employées.

Dans certains cas on peut envisager l'adjonction d'au moins un stabilisant associé, tel pyrophosphate, stannate ou nitrate alcalins.

Il est donné ci-après des exemples qui illustrent l'invention à titre non limitatif.

Exemple 1

On divise en quatre fractions une solution de peroxyde d'hydrogène à 70% de peroxyde en poids, exempte de stabilisants et présentant une perte relative par décomposition au test à 100°C durant 15 heures de 1,45%.

Dans chacune de ces fractions, on ajoute un des acides amino-méthyl phosphoniques indiqués dans le tableau suivant, à la dose de 5 ou 10 mg/litre de solution de peroxyde. Sur ces nouvelles solutions de peroxyde, on effectue de nouveau le test de décomposition à 100°C en 15 heures, et, on obtient:

TABLEAU 1

| Adjuvant | Concentration mg/litre | Pertes % en 15h à 100° |
|---|---|---|
| Acide éthylène-diamino tétra (méthyl phosphonique) (EDTP) | 5 | 1,09 |
| Acide éthylène diamino tétra (méthyl phosphonique) (EDTP) | 10 | 0,41 |
| Acide diéthylène-triamino penta (méthyl phosphonique) (DTPP) | 5 | 0,61 |
| Acide diéthylène triamino penta (méthyl phosphonique) (DTPP) | 10 | 0,24 |
| Pas d'adjuvant | 0 | 1,45 |

On remarque que de très faibles doses de l'acide diéthylène triamino penta (méthylphosphonique) confèrent à la solution de peroxyde d'hydrogène une stabilité remarquable, de sorte qu'il n'y a aucun intérêt à envisager l'association d'un autre stabilisant et de surcharger inutilement cette solution de peroxyde d'hydrogène.

Exemple 2

Dans une solution de peroxyde d'hydrogène à 70% en poids, de qualité courante, non stabilisée et contenant seulement moins de 8 mg/litre de $P_2O_5$, de $NO_3$— ou de sodium moins de 30 micro g./l de fer et titane et moins de 10 micro g./l de cuivre, chrome et nickel, présentant un pH de 0,5 et une perte relative à 100°C en 15 heures de 1,06%, on ajoute 0,1 mg/l d'ions ferriques (du nitrate de fer).

1. On divise une partie de cet échantillon en 12 fractions. Dans chacune de ces fractions, on ajoute un seul stabilisant à raison de 25 mg/litre de produit exprimé sous la forme indiquée dans le tableau ci-après. Le pH de chacun des échantillons est ajusté à 0,7 par adjonction d'acide phosphorique ou de soude dilués. Ces différents échantillons sont alors soumis au test de décomposition à 100°C en 15 heures. Les résultats sont donnés dans la 2 ème colonne du tableau 2 ci-après.

2. L'autre partie de cet échantillon est préalablement diluée à 35% en poids per l'eau déminéralisée elle contient donc 0,05 à 0,06 mg/litre de fer. On l'a divisé en 12 fractions, dans chacune desquelles on ajoute un seul stabilisant à raison de 25 mg/litre, les mêmes que ceux de la lère série de tests. Le pH de chacun des échantillons est ajusté à 1,8 par l'acide ou la soude. On applique aux différentes fractions le test de décomposition à 100°C en 15 heures. Les resultats sont consignés dans la 3ème colonne du tableau no 2 ci-dessous.

TABLEAU 2

| Stabilisants (25 mg/l $H_2O_2$) | Taux de décomposition relatif % a 100° en 15 heures | |
|---|---|---|
| | $H_2O_2$ 70% | $H_2O_2$ 35% |
| Aucun stabilisant | 3,8 | 9,9 |
| Pyrophosphate disodique | 2,1 | 9,75 |
| Acide dipicolinique | 9,65 | 7,7 |
| Acide ascorbique | 4,7 | 13,8 |
| Stannate de sodium ($Na_2SnO_3$–$3H_2O$) | 0,70 | 0,60 |
| Acide Ethane-1, hydroxy-1,1-diphosphonique | 2,0 | 2,4 |
| Acide amino-triacétique (N.T.A.) | 36.2 | 9,2 |
| Acide éthylène-diaminotétracétique (E.D.T.A.) | 3,7 | 11,7 |
| Acide diéthylène-triaminopentacétique (D.T.P.A.) | 7,8 | 10,7 |
| Acide nitrilo-tri(méthylphosphonique) (N.T.P.) | 0,37 | 0,93 |
| Acide éthylène-diaminotétra(méthyl phosphonique) (E.D.T.P.) | 0,33 | 0,41 |
| Acide diéthylène-triaminopenta(méthyl phosphonique) (D.T.P.P.) | 0,38 | 0,51 |

On remarque que les stabilisants les plus actifs sont les acides amino-méthyl phosphoniques; leurs homologues aminoacétiques ne se présentent pas au test à 100°C comme des stabilisants; on remarquera en outre que l'activité de l'acide éthane-1 hydroxy-1,1 diphosphonique est beaucoup plus faible que celle des acides amino-méthyl phosphoniques.

Exemple 3

On dispose de deux solutions de peroxyde d'hydrogène, l'une à 70% en poids (sol. A), l'autre à 35% (sol. C). Ces solutions sont de qualité très différentes:

— la solution "A" est de qualité très médiocre et ne répond pas aux normes commerciales, malgré une "surstabilisation" au pyrophosphate disodique et une acidification

— la solution "C" est de qualité courante, simplement stabilisée avec 35 mg/l de pyrophosphate disodique.

L'analyse de ces solutions est la suivante:

| | $H_2O_2$ A | $H_2O_2$ C |
|---|---|---|
| Concentration en poids | 70,2% | 35,3% |
| pH | 0,1 | 2,6 |
| Pertes à 100° en 15 heures | 6.4% | 2,65% |
| Contenu – en $P_2O_5$ (mg/l) | 110 | 22 |
| – en $NO_3$ ,, | 295 | 61 |
| – en $Na_2O$ ,, | 166 | 10 |
| – en Fer (micro g./l) | 280 | <30 |
| – en Titane ,, ,, | 30 | <30 |
| – en Chrome ,, ,, | 70 | <20 |
| – en Nickel ,, ,, | 60 | <20 |
| – en Cuivre ,, ,, | <10 | – |

On dilue une partie de la solution "A" à l'eau déminéralisée pour amener son titre à 35% en poids. On la dénomme "solution B."

On se propose de "surstabiliser" ces solutions par les complexants suivants:

—Acide nitrilo (ou amino) triacétique (N.T.A)

—Acide nitrilo tri (méthyl phosphonique) (N.T.P)

—Acide éthylène-diamino-tétracétique (E.D.T.A)

—Acide éthylène-diamino-tétra (méthyl phosphonique) (E.D.T.P)

—Acide diéthylène-triamino-pentacétique (D.T.P.A)

—Acide diéthylène-triamino-penta (méthyl phosphonique) (D.T.P.P)

Pour cela on divise chacune des 3 solutions A, B et C en 13 fractions; dans chacune d'elles, on ajoute 10 à 100 mg/litre de chacun des complexants désignés ci-dessus et, avec ces solutions stabilisées on effectue le test de décomposition à 100°C pendant 15 heures. Les résultats pertes relatives % sont consignés dans le tableau suivant n° 3.

TABLEAU 3

| Solutions "A et B" | | | Stabilisant ajouté | Solution "C" | |
|---|---|---|---|---|---|
| Solution A<br>Conc. = 70,2%<br>pH = 0,1 | Solution B<br>Conc. = 35,1%<br>pH = 1,65 | Concentration stabilisant mg/litre | | Conc. 35,3<br>pH 2,6 | Concentration stabilisant mg/litre |
| 6,4 | 54,4 | 0 | Rien | 2,65 | 0 |
| 4,92 | 69,5 | 100 | N.T.A. | 84,2 | 50 |
| 3,20 | 18,2 | 50 | ,, | 92,4 | 20 |
| 3,62 | 11,4 | 25 | ,, | 4,25 | 10 |
| 6,23 | 23,8 | 50 | E.D.T.A. | 6,9 | 20 |
| 5,20 | 48,6 | 25 | ,, | 7,0 | 10 |
| 5,28 | 43,6 | 50 | D.T.P.A. | 3,3 | 20 |
| 4,25 | 46,4 | 25 | ,, | 4,55 | 10 |
| 1,06 | 0,88 | 100 | N.T.P. | 0,65 | 50 |
| 1,91 | 1,67 | 50 | ,, | 0,58 | 20 |
| 2,79 | 2,46 | 25 | ,, | 0,73 | 10 |
| 1,08 | 0,49 | 50 | E.D.T.P. | 1,13 | 20 |
| 2,96 | 0,54 | 25 | ,, | 1,04 | 10 |
| 0,75 | 0,71 | 50 | D.T.P.P. | 1,09 | 20 |
| 2,22 | 0,77 | 25 | ,, | 0,35 | 10 |

Les acides amino-acétiques (N.T.A., E.D.T.A., D.T.P.A. du tableau ci-dessus) ne passent pas l'épreuve du test de stabilité à 100°C en 15 heures (et à fortiori en 24 heures); donc, ils ne peuvent pas être retenus comme des stabilisants des solutions de peroxyde d'hydrogène. On remarque même que dans les solutions diluées à 35% de peroxyde, ils peuvent avoir un effet négatif, en particulier le N.T.A.

Par contre, le tableau ci-dessus met en évidence la grande efficacité des acides amino-méthyl phosphoniques notamment de celle de l'acide diéthylène triamino penta (méthyl phosphonique) (dans le tableau N.T.P., E.D.T.P., D.T.P.P.). Ainsi, des solutions ne répondant pas au test de stabilité (solution A à 70% et surtout B à 35%) donc non commercialisables, et, irrécupérables par traitement massif au pyrophosphate et acidification, recouvrent une stabilité excellente grâce à un ajout de seulement 25 mg/litre d'un des acides amino-méthyl phosphoniques.

Exemple 4

On utilise la solution de peroxyde d'hydrogène primaire de l'exemple 2; exempte de stabilisant. On en prélève 6 échantillons de 25 ml dans chacun desquels on ajoute 25 mg/litre d'un des stabilisants utilisés dans l'exemple 3 soit, les acides aminoacétiques "N.T.A., E.D.T.A., et D.T.P.A.", soit les acides aminométhyl phosphoniques "N.T.P., E.D.T.P. et D.T.P.P." On porte ces échantillons à 100°C et on applique la méthode de mesure continue de la décomposition en fonction du temps par mesure de l'oxygène dégagé, méthode précédemment décrite; l'essai est poursuivi pendant 15 heures. Les résultats: volume oxygène dégagé cumulé, en fonction du temps, sont illustrés sur la figure I du dessin annexé. En abscisses on porte le temps exprimé en heures, et en ordonnées le volume d'oxygène dégagé exprimé en ml. Les courbes 1 à 6 correspondent respectivement au N.T.A., E.D.T.A., D.T.P.A., E.D.T.P., N.T.P. et D.T.P.P.

Au vu de ces courbes on remarque que:

1. Les pentes de décomposition des acides aminométhyl phosphoniques sont faibles et sont des

droites presque parfaites, traduisant une très bonne stabilité, constante dans le temps.

2. Pour les acides amino-acétiques "E.D.T.A. et D.T.P.A.", on obtient sur un temps court (2 heures) une droite dont la pente se confond approximativement avec celle des acides phosphoniques; entre 2 h et 3 (ou 4 heures), la pente augmente progressivement pour se stabiliser à partir de 4 heures et au-delà en une nouvelle droite de forte pente.

3. Pour le "N.T.A.," même phénomène, mais plus rapide. Après 1 heure, presque sans transition, passage d'une pente faible à une droite de pente exceptionellement forte, conformément aux anomalies présentées par ce produit dans les exemples précédents en 15 heures.

Le comportement des acides amino-acétiques dans ce test confirme donc bien leurs propriétés séquestrantes, mais à 100°C en présence de peroxyde d'hydrogène, leur activité s'annule en quelques heures; on peut supposer par oxydation et destruction de leur molécule.

Il est remarquable et inattendu que cette destruction ne touche pas leurs homologues amino-méthyl phosphoniques.

Les exemples mettent en évidence l'efficacité des acides amino-méthyl phosphoniques (N.T.P., E.D.T.P. et D.T.P.P.). L'activité et la résistance chimique de l'acide diéthylène triamino penta (méthyl phosphonique) sont confirmées dans tous les essais, et l'intérêt du D.T.P.P. est renforcé par son coût nettement inférieur notamment à celui de l'acide éthylène-diamino tétra (méthyl phosphonique).

## Revendications

1. Solution aqueuse stabilisée de peroxyde d'hydrogène pure ou commerciale de concentration comprise entre 30 et 90%, en poids de peroxyde d'hydrogène 100%, caractérisée en ce qu'elle contient à titre de stabilisant l'acide diéthylène triaminopenta (méthyl phosphonique) de formule:

$$(H_2PO_3\,CH_2)_2NCH_2{-}CH_2{-}\underset{\displaystyle CH_2PO_3H_2,}{\underset{|}{N}}{-}CH_2{-}CH_2{-}N\,(CH_2PO_3H_2)_2$$

sous forme acide, de sel de sodium, potassium ou ammonium, utilisé à une concentration comprise entre 5 et 100 mg par litre de solution de peroxyde d'hydrogène.

2. Solution aqueuse stabilisée de peroxyde d'hydrogène selon la revendication 1, caractérisée en ce que le stabilisant est utilisé à une concentration comprise entre 25 et 50 mg par litre de solution de peroxyde d'hydrogène.

## Patentansprüche

1. Wäßrige stabilisierte reine oder handelsübliche Wasserstoffperoxidlösung mit einer Konzentration von 30 bis 90 Gewichtsprozent 100prozentigen Wasserstoffperoxids, dadurch gekennzeichnet, daß sie als Stabilisierungsmittel Diethylentriaminpenta-(methylphosphonsäure) der Formel:

$$((H_2PO_3CH_2)_2NCH_2{-}CH_2{-}\underset{\displaystyle CH_2PO_3H_2,}{\underset{|}{N}}{-}CH_2{-}CH_2{-}N(CH_2PO_3H_2)_2$$

in der Form der Säure, des Natrium-, Kalium- oder Ammoniumsalzes in einer Konzentration von 5 bis 100 mg je Liter der Wasserstoffperoxidlösung enthält.

2. Wäßrige stabilisierte Wasserstoffperoxidlösung nach Anspruch 1, dadurch gekennzeichnet, daß sie das Stabilisierungsmittel in einer Konzentration von 25 bis 50 mg je Liter der Wasserstoffperoxidlösung enthält.

## Claims

1. Aqueous stabilized pure or commercial solution of hydrogen peroxide having a concentration between 30 and 90 per cent by weight of 100% hydrogen peroxide, characterized in that it contains as stabilizer diethylene triaminopenta (methyl phosphonic acid) having the formula

$$(H_2PO_3\,CH_2)_2NCH_2{-}CH_2{-}\underset{\displaystyle CH_2PO_3H_2}{\underset{|}{N}}{-}CH_2{-}CH_2{-}N\,(CH_2PO_3H_2)_2$$

in the form of the acid, the sodium, potassium or ammonium salt, utilized in a concentration between 5 and 100 mg per liter of the solution of hydrogen peroxide.

2. Aqueous stabilized solution of hydrogen peroxide according to claim 1, characterized in that it contains the stabilizer in a concentration between 25 and 50 mg per liter of the solution of hydrogen peroxide.

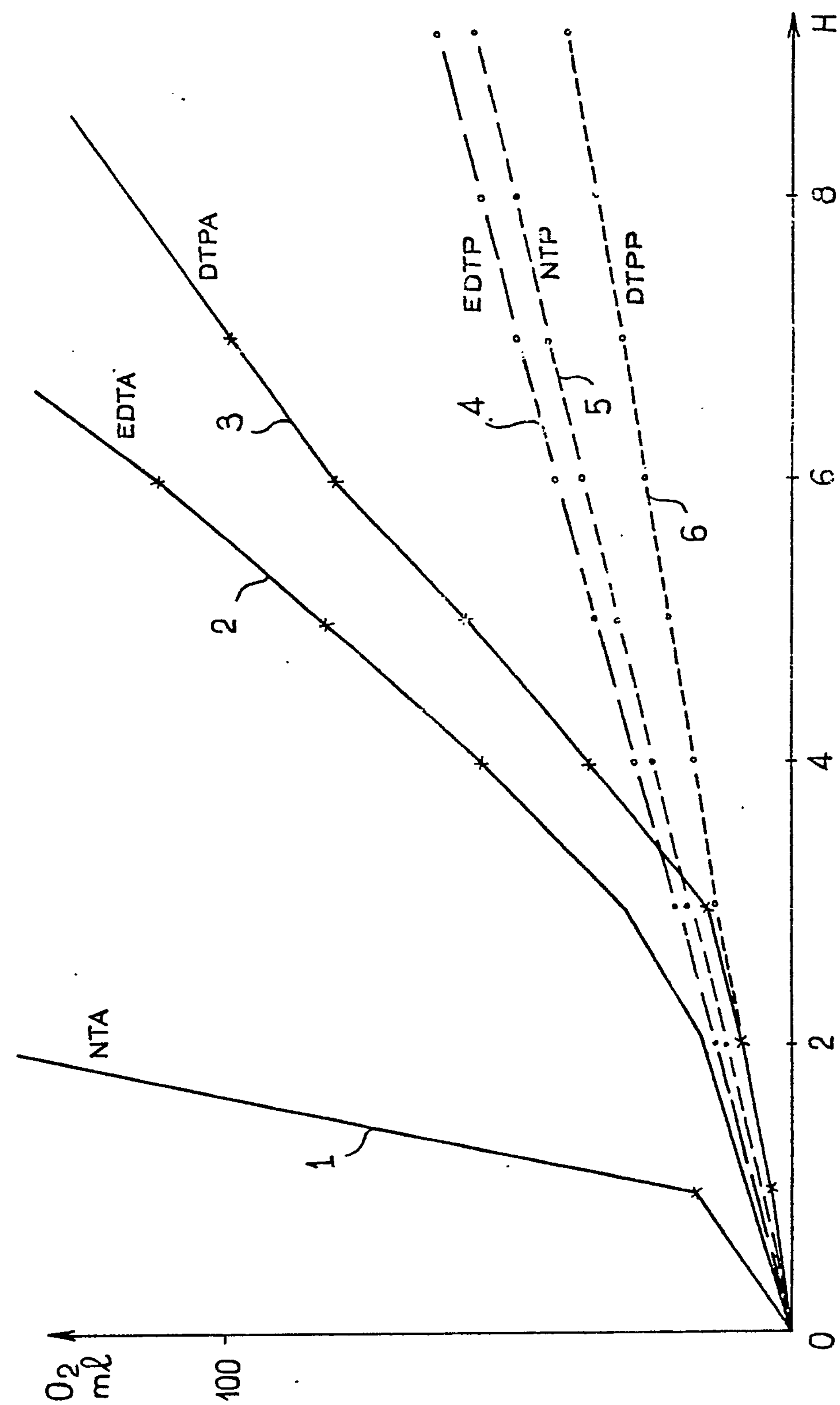

$O_2$ ml
100
0
2
4
6
8
H
NTA
EDTA
DTPA
EDTP
NTP
DTPP
1
2
3
4
5
6